# EUROPÄISCHE PATENTSCHRIFT

(11) **EP 2 549 795 B1**
(45) Veröffentlichungstag und Bekanntmachung des Hinweises auf die Patenterteilung: **08.07.2015**
(21) Anmeldenummer: 12005253.5
(22) Anmeldetag: 17.07.2012
(51) Int. Cl.: H04W 28/18

(54) **Verfahren zur Optimierung der Dienstabdeckung von Funkzellen, Verfahren zur Herstellung eines Telekommunikationskontakts sowie entsprechendes Zugangsnetz, Computerprogramm und Computerprogrammprodukt.**
Method for optimization of service coverage of radio cells, method for setting up a telecommunication link and corresponding access network, computer program and computer program product.
Procédé d'optimisation de couverture de service des cellules radio, procédé d'établir des liens de télécommunication et réseau d'accès correspondant, logiciel d'ordinateur et produit de logiciel d'ordinateur

(30) Priorität: 20.07.2011 DE 102011107945
(43) Veröffentlichungstag der Anmeldung: 23.01.2013
(73) Patentinhaber: Deutsche Telekom AG, 53113 Bonn (DE)
(72) Erfinder: Blicker, Stephan, 53343 Wachtberg (DE)
(74) Vertreter: Schwöbel, Thilo K.

(56) Entgegenhaltungen:
- EP-A1- 1 519 607
- US-A1- 2010 124 926

## Beschreibung

### Stand der Technik

Die Erfindung betrifft ein Verfahren zur Herstellung eines Telekommunikationskontakts in Form einer Telekommunikationsverbindung oder einer Telekommunikationssession zwischen einem Mobilfunk-Telekommunikationsnetz und einem Telekommunikationsendgerät eines Kunden des Mobilfunk-Telekommunikationsnetzes, wobei das Mobilfunk-Telekommunikationsnetz ein Kernnetz des Mobilfunk-Telekommunikationsnetzes und ein Zugangsnetz des Mobilfunk-Telekommunikationsnetzes umfasst, wobei das Kernnetz eine bei der Herstellung, beim Betrieb und beim Beenden des Telekommunikationskontakts benutzte zentrale Teilnehmerdatenbank aufweist.

Ferner betrifft die Erfindung ein Verfahren zur statischen und/oder dynamischen Optimierung der Dienstabdeckung einer Mehrzahl von Funkzellen eines Mobilfunk-Telekommunikationsnetzes, wobei das Mobilfunk-Telekommunikationsnetz ein Kernnetz des Mobilfunk-Telekommunikationsnetzes und ein Zugangsnetz des Mobilfunk-Telekommunikationsnetzes umfasst, wobei das Kernnetz eine zentrale Teilnehmerdatenbank aufweist. Weiterhin betrifft die Erfindung auch ein Zugangsnetz eines Mobilfunk-Telekommunikationsnetzes zur statischen und/oder dynamischen Optimierung der Dienstabdeckung einer Mehrzahl von Funkzellen des Mobilfunk-Telekommunikationsnetzes, wobei das Zugangsnetz eine Netzeinheit aufweist, wobei das Mobilfunk-Telekommunikationsnetz ein Kernnetz des Mobilfunk-Telekommunikationsnetzes und das Zugangsnetz umfasst, wobei das Kernnetz eine zentrale Teilnehmerdatenbank aufweist. Es ist allgemein bekannt, die Funktion und den Betrieb von Mobilfunk-Telekommunikationsnetzen zu optimieren, beispielsweise mittels Werkzeugen wie Service Performance Management (Dienstgüte-Management) oder Customer Experience (Kundenzufriedenheits-Management) Management. Hierbei werden Messungen bzw. Messzähler bzw. Zählerinformationen des Zugangsnetzes und/oder des Kernnetzes des Mobilfunk-Telekommunikationsnetz dazu benutzt, Netzengpässe vorauszusehen und die Dienstqualität mittels definierter Leistungskennzahlen (bzw. sogenannter Key Performance Indicators, KPI) zu messen bzw. zu überwachen.

Der Unterschied zwischen dem Dienstgüte-Management und dem Kundenzufriedenheits-Management besteht häufig darin, dass im Falle des Kundenzufriedenheitsmanagements eine Korrelation zwischen Attributen
-- des Kunden (der ein Telekommunikationsendgerät in einem Mobilfunk-Telekommunikationsnetz betreibt und hierfür einen entsprechenden Vertrag, typischerweise einen im Vorhinein zu bezahlenden Vertrag (sogenannter prepaid-Vertrag) oder einen im Nachhinein zu bezahlenden Vertrag (sogenannter postpaid-Vertrag oder Laufzeitvertrag), mit dem Betreiber des Mobilfunk-Telekommunikationsnetzes hat),
-- des Telekommunikationsendgeräts,
-- des benutzten Mobilfunk-Telekommunikationsnetzes bzw. des benutzten Teilnetzes bzw. der benutzten Domäne des Mobilfunk-Telekommunikationsnetzes und
-- des benutzten Telekommunikations-Dienstes
hergestellt wird.

Typische Attribute eines Kunden umfassen beispielsweise:
-- ob es sich bei dem Kunden um einen Kunden mit einem prepaid-Vertrag oder einem postpaid-Vertrag handelt,
-- für welchen Umsatz der Kunde in der Vergangenheit stand; hierbei können beispielsweise Eingruppierungen in sogenannte "gold-Kunden" (d.h. mit vergleichsweise hohem Umsatz), sogenannte "silber-Kunden" (d.h. mit im Vergleich zu den "gold-Kunden" geringerem Umsatz) und sogenannte "bronze-Kunden" (d.h. mit im Vergleich zu den "silber-Kunden" noch geringerem Umsatz),
-- ob es sich bei dem Kunden um einen Geschäftskunden oder einen Privatkunden handelt.

Typische Attribute des Telekommunikationsendgeräts beziehen sich beispielsweise auf dessen Typ und/oder das verwendete Betriebssystem, d.h. ob es sich um ein Gerät mit iOS-Betriebssystem handelt (wie beispielsweise ein iPhone oder iPad) oder ob es sich um ein Gerät mit einem Android-Betriebssystem handelt.

Typische Attribute des benutzten Mobilfunk-Telekommunikationsnetzes bzw. des benutzten Teilnetzes bzw. der benutzten Domäne des Mobilfunk-Telekommunikationsnetzes beziehen sich beispielsweise darauf, ob das GSM-Mobilfunknetz verwendet wird oder ob das GPRS-Mobilfunknetz verwendet wird oder ob das UMTS-Mobilfunknetz verwendet wird oder ob das LTE-Mobilfunknetz verwendet wird, ob eine CS-Domäne (circuit switched) oder eine PS-Domäne (packet switched) verwendet wird. Die für die Zwecke des Dienstgüte-Managements bzw. des Kundenzufriedenheits-Managements herangezogenen Informationen sind dabei häufig auf die einzelnen Netzkomponenten, insbesondere des Kernnetzes, dieser Mobilfunknetz-Domänen bezogen, wie zum Beispiel MSC (Mobile Switching Center) für die CS (circuit switched) Domäne, GSN (GPRS (General Packet Radio Service) Service Node) für die PS (packet switched) Domäne bzw. Funkkomponenten (radio components) für beide Domänen.

Typische Attribute des benutzten Telekommunikations-Dienstes umfassen beispielsweise, ob es sich um einen CS (circuit switched Dienst (Sprachdienst, SMS, CS basierten Datendienst)) oder um einen auf dem PS (packet switched) basierten IP-Protokoll (Internet Protocol) aufsetzenden Dienst handelt.

In der Publikation EP 1519607A1 wird ein System und eine Methode, um Common Radio Resource Management auszuführen, beschrieben.

Nachteilig bei der Verwendung der bekannten Verfahren zur Überwachung von Mobilfunk-Telekommunikationsnetzen, insbesondere mit Blick auf eine umsatzorientierte Dienstüberwachung bzw. Dienstgüteüberwachung, ist, dass im Zugangsnetz von Mobilfunk-Telekommunikationsnetzen typischerweise keine Information bezüglich des Kundensegments vorhanden ist bzw. keine diesbezüglichen Zähler bzw. Zählerinformationen vorhanden sind. Daher ist es nicht möglich, dass automatisiert die Dienstqualität des Zugangsnetzes mit einem speziellen Fokus auf das Kundensegment überwacht wird

### Offenbarung der Erfindung

Der Erfindung liegt daher die Aufgabe zugrunde, ein Verfahren zur Herstellung eines Telekommunikationskontakts bzw. ein Verfahren zur statischen und/oder dynamischen Optimierung der Dienstabdeckung einer Mehrzahl von Funkzellen eines Mobilfunk-Telekommunikationsnetzes zur Verfügung zu stellen, mittels dem eine Dienstgüteüberwachung des Zugangsnetzes mit einem speziellen Fokus auf das Kundensegment in schneller, wenig komplexer und kostengünstiger Weise möglich ist.

Diese Aufgabe wird erfindungsgemäß gelöst durch das in Anspruch 1 beschriebene Verfahren. Ferner wird die Aufgabe erfindungsgemäß durch das in Anspruch 2 beschriebene Verfahren gelöst.

Erfindungsgemäß ist es vorgesehen, dass eine auf das Kundensegment bezogene Information bzw. einen Hinweis auf das Kundensegment enthaltende Information, das Teilnehmer-Informationselement, jedenfalls zum Zugangsnetz hin übertragen wird. Dies wird erfindungsgemäß normalerweise während der Herstellung und/oder während einer Modifikation des Telekommunikationskontakts durchgeführt.

Erfindungsgemäß ist es ferner bevorzugt vorgesehen, dass das Mobilfunk-Telekommunikationsnetz ein Dienstbereitstellungssystem (Provisionierungssystem) aufweist, wobei das Teilnehmer-Informationselement zeitlich vor der Herstellung des Telekommunikationskontakts von dem Dienstbereitstellungssystem zur Teilnehmerdatenbank übertragen wird.

Hierdurch kann in einfacher und effizienter Weise das Teilnehmer-Informationselementdem Mobilfunk-Telekommunikationsnetz in einer Weise zur Verfügung gestellt werden, dass sichergestellt ist, dass für alle Telekommunikationsendgeräte das Teilnehmer-Informationselement vorhanden bzw. bekannt ist.

Erfindungsgemäß ist es vorgesehen, dass in Abhängigkeit des Teilnehmer-Informationselements im Zugangsnetz des Mobilfunk-Telekommunikationsnetzes eine Zählerinformation gespeichert wird.

Hierdurch ist es erfindungsgemäß in vorteilhafter Weise möglich, dass die Betriebs-Informationen bezüglich des Betriebs des Mobilfunk-Telekommunikationsnetzes in einer Funkzelle oder in einer Mehrzahl von Funkzellen in anonymisierter Form vorliegen, d.h. es ist zwar das Teilnehmer-Informationselement bezüglich eines spezifischen Telekommunikationsendgeräts, welches eine Zählerinformation generiert bzw. verändert hat (beispielsweise wurde ein Zähler um eine Zählereinheit erhöht oder erniedrigt), aber durch eine Auswertung lediglich des Zählerwertes bzw. der Zählerinformation kann nicht zurückverfolgt werden, welches Telekommunikationsendgerät bzw. welches Ereignis bezogen auf ein Telekommunikationsendgerät die Veränderung bzw. Generierung der Zählerinformation bewirkt hat.

Erfindungsgemäß ist ferner auch bevorzugt, dass das Teilnehmer-Informationselement von dem Zugangsnetz des Mobilfunk-Telekommunikationsnetzes zum Telekommunikationsendgerät übertragen wird.

Hierdurch ist es in vorteilhafter Weise realisierbar, dass einer abfragenden Instanz innerhalb des Mobilfunk-Telekommunikationsnetzes die Möglichkeit eingeräumt wird, in einfacher Weise auf weitere detaillierte Daten mit Blick auf die Optimierung des Betriebs des Mobilfunk-Telekommunikationsnetzes zuzugreifen.

Ferner ist es erfindungsgemäß bevorzugt vorgesehen, dass die Teilnehmerdatenbank ein Home Location Register (HLR) und/oder ein Home Subscriber Server (HSS) ist.

Hierdurch ist es einfach und kostengünstig möglich, an zentraler Stelle die erforderlichen Informationen zu den einzelnen Telekommunikationsendgeräten zu speichern.

Erfindungsgemäß ist es weiterhin auch bevorzugt vorgesehen, dass das Teilnehmer-Informationselement eine Information oder eine Mehrzahl von Informationen der nachfolgenden Elemente aufweist:
-- der Benutzertyp, der von einer entweder geschäftlichen oder aber privaten Benutzung des Mobilfunk-Telekommunikationsnetzes abhängt, (Geschäftskunde oder Privatkunde)
-- den Typ der vereinbarten Dienstgütevereinbarung (service level agreement),
-- der Tarif des Privatkundenbenutzers, der von einer vertraglichen Beziehung entweder mit Vorauszahlung (prepaid) oder mit Laufzeitvertrag (postpaid) abhängt und der verschiedene vertragsrelevante Kenngrößen für den monatlichen Umsatz beinhaltet
-- eine Information, ob es sich um einen VIP-Benutzer handelt,
-- eine Information, ob es sich um einen roaming-Benutzer mit hohem Umsatz handelt.

Hierdurch ist es erfindungsgemäß in einfacher Weise möglich, dass eine Vielzahl von Parametern und Informationen einem Optimierungswerkzeug zur Verfügung gestellt werden.

Ein weiterer Gegenstand der vorliegenden Erfindung ist ein in Anspruch 7 beschriebenes Zugangsnetz eines Mobilfunk-Telekommunikationsnetzes.

Ferner bezieht sich die vorliegende Erfindung auch auf ein Computerprogramm mit Programmcodemitteln, mit deren Hilfe alle Schritte des erfindungsgemäßen Verfahrens durchführbar sind, wenn das Computerprogramm auf einer Netzeinheit eines Mobilfunk-Telekommunikationsnetzes, einem Computer oder einer entsprechenden Recheneinheit ausgeführt wird.

Weiterhin ist Gegenstand der vorliegenden Erfindung ein Computerprogrammprodukt mit einem computerlesbaren Medium und einem auf dem computerlesbaren Medium gespeicherten Computerprogramm mit Programmcodemitteln, die dazu geeignet sind, dass alle Schritte des erfindungsgemäßen Verfahrens durchführbar sind, wenn das Computerprogramm auf einer Netzeinheit eines Mobilfunk-Telekommunikationsnetzes, einem Computer oder einer entsprechenden Recheneinheit ausgeführt wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt eine schematische Ansicht eines Dienstbereitstellungssystems und einer Teilnehmerdatenbank.
- **Figur 2**: zeigt ein Mobilfunk-Telekommunikationsnetz mit einem Telekommunikationsendgerät sowie die Übertragung eines Teilnehmer-Informationselements.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

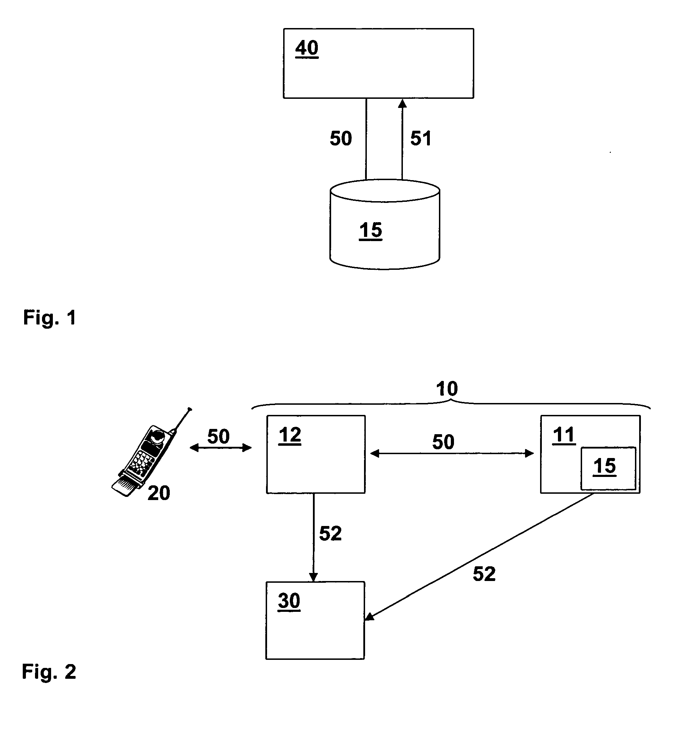

In Figur 1 ist eine schematische Ansicht eines Dienstbereitstellungssystems 40 und einer Teilnehmerdatenbank 15 dargestellt.

In Figur 2 ist in schematischer Darstellung ein Mobilfunk-Telekommunikationsnetz 10 mit einem Telekommunikationsendgerät 20 sowie die Übertragung eines Teilnehmer-Informationselements 50 abgebildet. Das Mobilfunk-Telekommunikationsnetz 10 umfasst ein Kernnetz 11 (core network) und ein Zugangsnetz 12 (access network). Das Telekommunikationsendgerät 20 ist mittels des Zugangsnetzes 12 an das Mobilfunk-Telekommunikationsnetz 10 angebunden bzw. hat einen Kontakt (Telekommunikationskontakt) zum Mobilfunk-Telekommunikationsnetz 10. Der Telekommunikationskontakt kann erfindungsgemäß beispielsweise als eine Telekommunikationsverbindung (verbindungsorientiert) oder als eine Telekommunikationssession (paketorientiert) oder aber als eine Kombination eines Telekommunikationskontakts und einer Telekommunikationssession vorgesehen sein, beispielsweise abhängig davon, an welcher Domäne des Mobilfunk-Telekommunikationsnetzes das Telekommunikationsendgerät angebunden ist. Erfindungsgemäß ist es vorgesehen, dass ein Teilnehmer-Informationselement 50 im Mobilfunk-Telekommunikationsnetz 10 erzeugt und vorhanden ist, wobei das Teilnehmer-Informationselement 50 jedenfalls zur Generierung bzw. Aktualisierung von Indikatoren der Leistung oder Dienstgüte des Mobilfunk-Telekommunikationsnetzes 10 bezogen auf eine Funkzelle oder eine Mehrzahl von Funkzellen benutzt wird. Hierzu ist es erfindungsgemäß vorgesehen, dass das Teilnehmer-Informationselement 50 jedenfalls im Zugangsnetz 12 vorhanden ist. Das Teilnehmer-Informationselement 50 ist beispielsweise als ein "customer segment information element" (CSIE) ausgebildet.

Hierzu ist es erfindungsgemäß bevorzugt vorgesehen, dass - wie in Figur 1 gezeigt - das Teilnehmer-Informationselement 50 von einem Dienstbereitstellungssystem 40 (IT Provisioning System) einer Teilnehmerdatenbank 15 zugeleitet wird. Seitens der Teilnehmerdatenbank 15 wird mittels einer Bestätigungsnachricht 51 der Empfang des Teilnehmer-Informationselements 50 bestätigt. Erfindungsgemäß kommt als Teilnehmerdatenbank 15 beispielsweise ein Netzelement des Mobilfunk-Telekommunikationsnetzes 10 in Frage, welches die Funktionalität eines HLR (Home Location Register) oder eines HSS (Home Subscriber Server) oder auch eine Funktionalität eines kombinierten HLR und HSS aufweist. Das Teilnehmer-Informationselement 50 wird in der Teilnehmerdatenbank 15 gespeichert und stellt einen zusätzlichen Parameter des Teilnehmers (bzw. des Kunden) dar, der das Telekommunikationsendgerät 20 betreibt.

Erfindungsgemäß ist es weiterhin vorgesehen, dass bei der Herstellung eines Telekommunikationskontakts zwischen dem Telekommunikationsendgerät 20 und dem Mobilfunk-Telekommunikationsnetz 10 das Teilnehmer-Informationselement 50 vom Kernnetz 11 bzw. von der Teilnehmerdatenbank 15 jedenfalls zum Zugangsnetz 12 übertragen wird. Ggf. kann das Teilnehmer-Informationselement 50 auch noch zum Telekommunikationsendgerät 20 übertragen werden.

Hierdurch ist es erfindungsgemäß vorteilhaft möglich, dass mittels einer Dienstgüte-Management-Einheit 30 (Service Performance Management entity) Informationen bezüglich der Dienstgüte, d.h. Dienstgüteinformationen 52, vom Zugangsnetz 12 abgefragt werden können, wobei die Dienstgüteinformationen 52 mit Blick auf das Kundensegment (d.h. unter Benutzung der Informationen der Teilnehmer-Informationselemente einer Mehrzahl von Telekommunikationsendgeräten in einem Beobachtungsbereich, beispielsweise einer Funkzelle oder auch einer Mehrzahl von Funkzellen) differenzierbar sind. Die Dienstgüteinformationen 52 können insbesondere mittels Zählerinformationen gewonnen werden, so dass zum einen leicht und zum anderen schnell (d.h. ohne großen zeitlichen Verzug) Indikatoren zur Dienstgüte ermittelbar sind, die differenzierbar sind nach Kundensegmentdaten.

Erfindungsgemäß ist es vorgesehen, dass die nach Kundensegmenten differenzierbaren Dienstgüteinformationen 52 kombiniert werden mit herkömmlicherweise erhobenen Daten zur Dienstgüte.

Erfindungsgemäß ist es in vorteilhafter Weise vorgesehen, dass das Teilnehmer-Informationselement 50 eine Information oder eine Mehrzahl von Informationen der nachfolgenden Elemente aufweist:
-- der Benutzertyp, der von einer entweder geschäftlichen oder aber privaten Benutzung des Mobilfunk-Telekommunikationsnetzes abhängt,
-- den Typ der vereinbarten Dienstgütevereinbarung (service level agreement),
-- das vereinbarte in einem Zeitintervall übertragbare oder übertragene Datenvolumen,
-- der Typ des Privatkundenbenutzers, der von einer vertraglichen Beziehung entweder mit Vorauszahlung (prepaid) oder mit Laufzeitvertrag (postpaid) abhängt,
-- eine Information, ob es sich um einen VIP-Benutzer handelt,
-- eine Information, ob es sich um einen roaming-Benutzer mit hohem Umsatz handelt,
-- eine Information, über die vereinbarte Dienstgüte (Quality of Service) des Benutzers.

Hierdurch ist es erfindungsgemäß beispielsweise in vorteilhafter Weise möglich, dass statisch und/oder dynamisch eine Optimierung der Funkparameter des Mobilfunk-Telekommunikationsnetzes 10 vorgenommen wird, so dass die Konfiguration der Funkparameter in möglichst optimaler Weise an eine momentane Lastsituation anpassbar ist. Hierbei kann die genaue Bedeutung bzw. der erkannte Inhalt bzw. die Kodierung (encoding) des Teilnehmer-Informationselements 50 seitens des Betreibers des Mobilfunk-Telekommunikationsnetzes 10 zumindest in Teilen gewählt werden. Die Struktur des Teilnehmer-Informationselements 50 hängt beispielsweise von der Anzahl der vom Netzbetreiber definierten Segmente ab. Beispielsweise stehen bei einer Kodierung unter Benutzung von 8 Bit (d.h. acht binäre Stellen) zumindest theoretisch 256 verschiedene unterscheidbare Kundensegmente zur Verfügung.

Um die Verwendung von Roaming zu erleichtern, ist es sinnvoll die Kodierung zwischen verschiedenen Zugangstechnologien (wie GSM (Global System for Mobile communication), UMTS (Univesal Mobile Telecommunication System), LTE (Long Term Evolution)) und verschiedenen Telekommunikationsendgeräten zu vereinheitlichen.

Erfindungsgemäß ist es weiterhin vorteilhaft möglich, dass anrufbezogene (d.h. bezogen auf CS (circuit switched) Anrufe) bzw. datenbezogene (d.h. bezogen auf PS (packet switched) Anrufe) Priorisierungsmechanismen in dynamischen Optimierungsalgorithmen verwendet werden.

Durch die erfindungsgemäße Benutzung des Teilnehmer-Informationselements 50 ist es vorteilhaft möglich, die Kapazität des Mobilfunk-Telekommunikationsnetzes 10 in einer Art und Weise zu optimieren, dass eine möglichst große Datenmenge bzw. eine möglichst gute Dienstgüte bzw. Dienstqualität besonders in solchen Funkzellen realisiert wird, die eine hohe Nachfrage aufweisen. In weniger stark (bezüglich insbesondere hoher Dienstqualität bzw. Datenvolumen) nachgefragten Bereichen des Mobilfunk-Telekommunikationsnetzes 10 kann die Netzkapazität in vorteilhafter Weise reduziert werden, so dass beispielsweise ein geringerer Stromverbrauch für den Betrieb des Mobilfunk-Telekommunikationsnetzes 10 in diesen Bereichen realisierbar ist.

Die Dienstgüte-Management-Einheit 30 (Service Performance Management entity) ist erfindungsgemäß bevorzugt in der Lage, in Quasi-Echtzeit Informationen zur Dienstgüte bereitzustellen, die nach dem Kundensegment differenziert sind. So ist es beispielsweise möglich, den Indikator der "HSDPA bearer setup success rate" (d.h. die Erfolgsrate der Telekommunikationsendgeräte innerhalb eines betrachteten Bereichs (etwa einer Funkzelle oder mehrerer Funkzellen), mittels HSDPA (High Speed Daterate Packt Access) Netzzugang zu erhalten) in Abhängigkeit des Kundensegments zu ermitteln und zu optimieren. Hierbei wird unter "Quasi-Echtzeit" ein maximaler zeitlicher Verzug von ca. 20 Minuten verstanden, bevorzugt von maximal lediglich 15 Minuten, besonders bevorzugt von maximal lediglich 10 Minuten und ganz besonders bevorzugt von maximal lediglich 5 Minuten.

## Patentansprüche

1. Verfahren zur statischen und/oder dynamischen Optimierung der Dienstabdeckung einer Mehrzahl von Funkzellen eines Mobilfunk-Telekommunikationsnetzes (10), wobei das Mobilfunk-Telekommunikationsnetz (10) ein Kernnetz (11) des Mobilfunk-Telekommunikationsnetzes (10) und ein Zugangsnetz (12) des Mobilfunk-Telekommunikationsnetzes (10) umfasst, wobei das Kernnetz (11) eine zentrale Teilnehmerdatenbank (15) aufweist, wobei während der Herstellung eines Telekommunikationskontakts in Form einer Telekommunikationsverbindung oder einer Telekommunikationssession zwischen dem Mobilfunk-Telekommunikationsnetz (10) und einem Telekommunikationsendgerät (20) eines Kunden des Mobilfunk-Telekommunikationsnetzes (10) wenigstens ein in der Teilnehmerdatenbank (15) gespeichertes Teilnehmer-Informationselement (50) vom Kernnetz (11) dem Zugangsnetz (12) zur Verfügung gestellt wird,
wobei das Teilnehmer-Informationselement (50) auf den Kunden des Mobilfunk-Telekommunikationsnetzes (10) bezogen ist und wenigstens eine Information über das Kundensegment umfasst, wobei in Abhängigkeit der von einer Mehrzahl von Telekommunikationsendgeräten in einer der Funkzelle oder einer Mehrzahl der Funkzellen herrührenden Teilnehmer-Informationselemente (50) im Zugangsnetz (12) des Mobilfunk-Telekommunikationsnetzes (10) eine Zählerinformation gespeichert wird und wobei die statische und/oder dynamische Optimierung der Dienstabdeckung der Mehrzahl von Funkzellen in Abhängigkeit der Zählerinformation erfolgt, wobei eine Konfiguration der Funkparameter der Mehrzahl von Funkzellen an eine momentane Lastsituation angepasst wird.

2. Verfahren zur Herstellung eines Telekommunikationskontakts in Form einer Telekommunikationsverbindung oder einer Telekommunikationssession zwischen einem Mobilfunk-Telekommunikationsnetz (10) und einem Telekommunikationsendgerät (20) eines Kunden des Mobilfunk-Telekommunikationsnetzes (10),
wobei das Mobilfunk-Telekommunikationsnetz (10) ein Kernnetz (11) des Mobilfunk-Telekommunikationsnetzes (10) und ein Zugangsnetz (12) des Mobilfunk-Telekommunikationsnetzes (10) umfasst, wobei das Kernnetz (11) eine bei der Herstellung, beim Betrieb und beim Beenden des Telekommunikationskontakts benutzte zentrale Teilnehmerdatenbank (15) aufweist, wobei während der Herstellung des Telekommunikationskontakts wenigstens ein in der Teilnehmerdatenbank (15) gespeichertes Teilnehmer-Informationselement (50) vom Kernnetz (11) dem Zugangsnetz (12) zur Verfügung gestellt wird,
wobei in Abhängigkeit des Teilnehmer-Informationselements (50) im Zugangsnetz (12) des Mobilfunk-Telekommunikationsnetzes (10) eine Zählerinformation gespeichert wird und
wobei das Teilnehmer-Informationselement (50) auf den Kunden des Mobilfunk-Telekommunikationsnetzes (10) bezogen ist und wenigstens eine Information über das Kundensegment umfasst.

3. Verfahren nach einem der vorhergehenden Ansprüche, **dadurch gekennzeichnet, dass** das Mobilfunk-Telekommunikationsnetz (10) ein Dienstbereitstellungssystem (40) aufweist, wobei das Teilnehmer-Informationselement (50) zeitlich vor der Herstellung des Telekommunikationskontakts von dem Dienstbereitstellungssystem (40) zur Teilnehmerdatenbank (15) übertragen wird.

4. Verfahren nach einem der vorhergehenden Ansprüche, **dadurch gekennzeichnet, dass** das Teilnehmer-Informationselement (50) von dem Zugangsnetz (12) des Mobilfunk-Telekommunikationsnetzes (10) zum Telekommunikationsendgerät (20) übertragen wird.

5. Verfahren nach einem der vorhergehenden Ansprüche, **dadurch gekennzeichnet, dass** die Teilnehmerdatenbank (15) ein Home Location Register und/oder ein Home Subscriber Server ist.

6. Verfahren nach einem der vorhergehenden Ansprüche, **dadurch gekennzeichnet, dass** das Teilnehmer-Informationselement (50) eine Information oder eine Mehrzahl von Informationen der nachfolgenden Elemente aufweist:
-- der Benutzertyp, der von einer entweder geschäftlichen oder aber privaten Benutzung des Mobilfunk-Telekommunikationsnetzes abhängt,
-- den Typ der vereinbarten Dienstgütevereinbarung,
-- das vereinbarte in einem Zeitintervall übertragbare oder übertragene Datenvolumen,
-- der Typ des Privatkundenbenutzers, der von einer vertraglichen Beziehung entweder mit Vorauszahlung oder mit Laufzeitvertrag abhängt,
-- eine Information, ob es sich um einen VIP-Benutzer handelt,
-- eine Information, ob es sich um einen roaming-Benutzer mit hohem Umsatz handelt,
-- eine Information, über die vereinbarte Dienstgüte des Benutzers.

7. Zugangsnetz (12) eines Mobilfunk-Telekommunikationsnetzes (10) zur statischen und/oder dynamischen Optimierung der Dienstabdeckung einer Mehrzahl von Funkzellen des Mobilfunk-Telekommunikationsnetzes (10), wobei das Zugangsnetz (12) eine Netzeinheit aufweist, wobei das Mobilfunk-Telekommunikationsnetz (10) ein Kernnetz (11) des Mobilfunk-Telekommunikationsnetzes (10) und das Zugangsnetz (12) umfasst, wobei das Kernnetz (11) eine zentrale Teilnehmerdatenbank (15) aufweist,
wobei das Zugangsnetz (12) derart vorgesehen ist, dass während der Herstellung eines Telekommunikationskontakts in Form einer Telekommunikationsverbindung oder einer Telekommunikationssession zwischen dem Mobilfunk-Telekommunikationsnetz (10) und einem Telekommunikationsendgerät (20) eines Kunden des Mobilfunk-Telekommunikationsnetzes (10), wenigstens ein in der Teilnehmerdatenbank (15) gespeichertes Teilnehmer-Informationselement (50) vom Kernnetz (11) dem Zugangsnetz (12) zur Verfügung gestellt wird,
wobei das Teilnehmer-Informationselement (50) auf den Kunden des Mobilfunk-Telekommunikationsnetzes (10) bezogen ist und wenigstens eine Information über das Kundensegment umfasst, wobei im Zugangsnetz (12) des Mobilfunk-Telekommunikationsnetzes (10) in Abhängigkeit des Teilnehmer-Informationselements (50) eine Zählerinformation gespeichert ist und wobei die statische und/oder dynamische Optimierung der Dienstabdeckung der Mehrzahl von Funkzellen in Abhängigkeit der Zählerinformation vorgesehen ist.

8. Computerprogramm mit Programmcodemitteln, mit deren Hilfe alle Schritte eines Verfahrens nach einem der Ansprüche 1 bis 6 durchführbar sind, wenn das Computerprogramm auf einer Netzeinheit eines Mobilfunk-Telekommunikationsnetzes (10), einem Computer oder einer entsprechenden Recheneinheit ausgeführt wird.

9. Computerprogrammprodukt mit einem computerlesbaren Medium und einem auf dem computerlesbaren Medium gespeicherten Computerprogramm mit Programmcodemitteln, die dazu geeignet sind, dass alle Schritte eines Verfahrens nach einem der Ansprüche 1 bis 6 durchführbar sind, wenn das Computerprogramm auf einer Netzeinheit eines Mobilfunk-Telekommunikationsnetzes (10), einem Computer oder einer entsprechenden Recheneinheit ausgeführt wird.

## Claims

1. Method for static and/or dynamic optimization of the service coverage of a plurality of radio cells of a mobile telecommunication network (10), wherein the mobile telecommunication network (10) includes a core network (11) of the mobile telecommunication network (10) and an access network (12) of the mobile telecommunication network (10), wherein the core network (11) comprises a central subscriber database (15), wherein during the setting up of a telecommunication contact in the form of a telecommunication connection or of a telecommunication session between the mobile telecommunication network (10) and a telecommunication transmission terminal (20) of a client of the mobile telecommunication network (10), at least one subscriber information element (50) stored in the subscriber database (15) is provided by the core network (11) to the access network (12),
wherein the subscriber information element (50) relates to the client of the mobile telecommunication network (10) and includes at least one information item concerning the client segment, wherein, as a function of the subscriber information elements (50) originating from a plurality of telecommunication terminals in one of the radio cells or in a plurality of the radio cells, a counter information is stored in the access network (12) of the mobile telecommunication network (10), and wherein the static and/or dynamic optimization of the service coverage of the plurality of radio cells occurs as a function of the counter information, wherein a configuration of the radio parameters of the plurality of radio cells is adapted to an instantaneous load situation.

2. Method for setting up a telecommunication contact in the form of a telecommunication connection or of a telecommunication session between a mobile telecommunication network (10) and a telecommunication terminal (20) of a client of the mobile telecommunication network (10), wherein the mobile telecommunication network (10) includes a core network (11) of the mobile telecommunication network (10) and an access network (12) of the mobile telecommunication network (10), wherein the core network (11) comprises a central subscriber database (15) used during the setting up, the operation and the termination of the telecommunication contact, wherein during the setting up of the telecommunication contact at least one subscriber information element (50) stored in the subscriber database (15) is made available by the core network (11) to the access network (12),
wherein, as a function of the subscriber information element (50), a counter information is stored in the access network (12) of the mobile telecommunication network (10), and
wherein the subscriber information element (50) relates to the client of the mobile telecommunication network (10) and includes at least one information item concerning the client segment.

3. Method according to any of the preceding claims, **characterized in that** the mobile telecommunication network (10) comprises a service providing system (40), wherein the subscriber information element (50) is transmitted temporally before the setting up of the telecommunication contact from the service providing system (40) to the subscriber database (15).

4. Method according to any of the preceding claims, **characterized in that** the subscriber information element (50) is transmitted from the access network (12) of the mobile telecommunication network (10) to the telecommunication terminal (20).

5. Method according to any of the preceding claims, **characterized in that** the subscriber database (15) is a home location register and/or a home subscriber server.

6. Method according to any of the preceding claims, **characterized in that** the subscriber information element (50) comprises an information item or a plurality of information items of the subsequent elements:
-- the user type, which depends either on the business use or on the private use of the mobile telecommunication network,
-- the type of the agreed-on service quality agreement,
-- the agreed-on data volume that can be transferred or is transferred in a time interval,
-- the type of the private client user, which depends on the contractual relation either with prepayment or with a fixed-term contract,
-- an information item indicating whether a VIP user is involved,
-- an information item indicating whether a roaming user with a high volume is involved,
-- an information item regarding the agreed-on service quality of the user.

7. Access network (12) of a mobile telecommunication network (10) for the static and/or dynamic optimization of the service coverage of a plurality of radio cells of the mobile telecommunication network (10), wherein the access network (12) includes a network unit, wherein the mobile telecommunication network (10) includes a core network (11) of the mobile telecommunication network (10) and the access network (12), wherein the core network (11) comprises a central subscriber database (15),
wherein the access network (12) is provided in such a manner that, during the establishment of a telecommunication contact in the form of a telecommunication connection or of a telecommunication session between the mobile telecommunication network (10) and a telecommunication terminal (20) of a client of the mobile telecommunication network (10), at least one subscriber information element (50) stored in the subscriber database (15) is made available by the core network (11) to the access network (12),
wherein the subscriber information element (50) relates to the client of the mobile telecommunication network (10) and includes at least one information item concerning the client segment, wherein in the access network (12) of the mobile telecommunication network (10), as a function of the subscriber information element (50), a counter information is stored, and wherein the static and/or dynamic optimization of the service coverage of the plurality of radio cells is provided as a function of the counter information.

8. Computer program with program code means, by means of which all the steps of a method according to any one of Claims 1 to 6 can be carried out, when the computer program is executed on a network unit of a mobile telecommunication network (10), a computer or a corresponding computation unit.

9. Computer program product with a computer readable medium and a computer program stored on the computer-readable medium with program code means that are suitable for ensuring that all the steps of a method according to any one of Claims 1 to 6 can be carried out, when the computer program is implemented on a network unit of a mobile telecommunication network (10), a computer or a corresponding computation unit.

## Revendications

1. Procédé d'optimisation statique et/ou dynamique de la couverture de service d'une pluralité de cellules radio d'un réseau de télécommunication mobile (10), dans lequel le réseau de télécommunication mobile (10) comprend un réseau de coeur (11) du réseau de télécommunication mobile (10) et un réseau d'accès (12) du réseau de télécommunication mobile (10), le réseau central (11) comprenant une base de données centrale de souscripteur (15), alors que pendant l'établissement d'un contact de télécommunication sous la forme d'une connexion de télécommunication ou d'une session de télécommunication entre le réseau de télécommunication mobile (10) et le terminal de transmission de télécommunication (20) d'un client du réseau de télécommunication mobile (10), au moins un élément d'information de souscripteur (50) enregistré dans la base de données de souscripteur (15) est fourni par le réseau de principal/centra 1 (11) au réseau d'accès (12),
dans lequel l'élément d'information de souscripteur (50) concerne le client du réseau de télécommunication mobile (10) et comprend au moins un point d'information concernant le segment du client, alors qu'en fonction des éléments d'information de souscripteur (50) provenant d'une pluralité de terminaux de télécommunication dans une des cellules radio ou dans une pluralité de cellules radio, une information de compteur est enregistrée dans le réseau d'accès (12) du réseau de télécommunication mobile (10), et alors que l'optimisation statique et/ou dynamique de la couverture de service de la pluralité de cellules radio a lieu en fonction des informations de compteur, une configuration des paramètres radio de la pluralité de cellules radio étant conçue pour une situation instantanée de charge.

2. Procédé d'établissement d'un contact de télécommunication sous la forme d'une connexion de télécommunication ou d'une session de télécommunication entre un réseau de télécommunication mobile (10) et un terminal de télécommunication (20) d'un client du réseau de télécommunication mobile (10), le réseau de télécommunication mobile (10) comprenant un réseau central (11) du réseau de télécommunication mobile (10) et un réseau d'accès (12) du réseau de télécommunication mobile (10), le réseau central (11) comprenant une base de données centrale de souscripteur (15) utilisée pendant l'établissement, le fonctionnement et l'achèvement du contact de télécommunication, alors que pendant l'établissement du contact de télécommunication, au moins un élément d'information de souscripteur (50) enregistré dans la base de données centrale de souscripteur (15) est rendue disponible par le réseau central(11) au réseau d'accès (12),
alors qu'en fonction de l'élément d'information de souscripteur (50), une information de compteur est enregistrée dans le réseau d'accès (12) du réseau de télécommunication mobile (10), et
alors que l'élément d'information de souscripteur (50) concerne le client du réseau de télécommunication mobile (10) et comprend au moins un point d'informations concernant le segment du client.

3. Procédé selon l'une quelconque des revendications précédentes, **caractérisé en ce que** le réseau de télécommunication mobile (10) comprend un système de prestation de services (40), l'élément d'information de souscripteur (50) étant transmis temporairement avant l'établissement du contact de télécommunication du système de prestation de services (40) à la base de données de souscripteur (15).

4. Procédé selon l'une quelconque des revendications précédentes, **caractérisé en ce que** l'élément d'information de souscripteur (50) est transmis du réseau d'accès (12) du réseau de télécommunication mobile (10) au terminal de télécommunication (20).

5. Procédé selon l'une quelconque des revendications précédentes, **caractérisé en ce que** la base de données de souscripteur (15) est un registre domestique de localisation et/ou un serveur domestique de souscripteur.

6. Procédé selon l'une quelconque des revendications précédentes, **caractérisé en ce que** l'élément d'information de souscripteur (50) comprend un point d'information ou une pluralité de points d'information des éléments suivants:
-- le type d'utilisateur, qui dépend soit de l'utilisation commerciale soit de l'usage privé du réseau de télécommunication mobile,
-- le type de l'accord de qualité de service convenu,
-- le volume de données convenu qui peut être transféré ou qui est transféré dans un certain laps de temps,
-- le type d'utilisateur de type client privé, qui dépend de la relation contractuelle soit avec prépaiement soit avec un contrat à conditions fixes,
-- un point d'information indiquant si un utilisateur de VIP est impliqué,
-- un point d'information indiquant si un utilisateur itinérant porteur d'un volume élevé est impliqué,
-- un point d'information concernant la qualité de services convenue de l'utilisateur.

7. Réseau d'accès (12) d'un réseau de télécommunication mobile (10) pour l'optimisation statique et/ou dynamique de la couverture de service d'une pluralité de cellules radio du réseau de télécommunication mobile (10), le réseau d'accès (12) comprenant une unité de réseau, le réseau de télécommunication mobile (10) comprenant un réseau central (11) du réseau de télécommunication mobile (10) et du réseau d'accès (12), le réseau central (11) comprenant une base de données de souscripteur (15),
le réseau d'accès (12) étant fourni de manière que, pendant l'établissement d'un contact de télécommunication sous la forme d'une connexion de télécommunication ou d'une session de télécommunication entre le réseau de télécommunication mobile (10) et un terminal de télécommunication (20) d'un client du réseau de télécommunication mobile (10), au moins un élément d'information de souscripteur (50) enregistré dans la base de données de souscripteur (15) est rendu disponible par le réseau de coeur (11) auprès du réseau d'accès (12),
l'élément d'information de souscripteur (50) concerne le client du réseau de télécommunication mobile (10) et comprend au moins un point d'information concernant le segment du client, alors que dans le réseau d'accès (12) du réseau de télécommunication mobile (10), en fonction de l'élément d'information de souscripteur (50), une information de compteur est enregistrée, et que l'optimisation statique et/ou dynamique de la couverture de service de la pluralité des cellules radio est fournie en fonction des informations de compteur.

8. Moyen de type programme informatique avec code de programme au moyen duquel toutes les étapes d'un procédé conforme à l'une quelconque des revendications 1 à 6 peuvent être exécutées, lorsque le programme informatique est exécuté sur une unité de réseau d'un réseau de télécommunication mobile (10), un ordinateur ou une unité correspondante de calcul.

9. Produit de type programme informatique doté d'un support lisible par ordinateur et programme informatique enregistré sur le support lisible par ordinateur avec un moyen de type code de programme qui convient pour garantir que toutes les étapes d'un procédé conforme à l'une quelconque des revendications 1 à 6 puissent être exécutées, lorsque le programme informatique est implémenté sur une unité de réseau d'un réseau de télécommunication mobile (10), d'un ordinateur ou d'une unité correspondante de calcul.
